# DEMANDE DE BREVET EUROPEEN

(11) **EP 4 840 627 A1**
(43) Date de publication de la demande: **18.11.2026**
(21) Numéro de dépôt: 26178184.3
(22) Date de dépôt: 12.05.2026
(51) Int. Cl.: B32B 5/18, B32B 5/24, B32B 27/12

(54) **STRUCTURE MULTICOUCHE POUR LA RÉALISATION D'UN REVÊTEMENT DE SOL**

(30) Priorité: 16.05.2025 FR 2505267
(71) Demandeur: GERFLOR, 69009 Lyon (FR)
(72) Inventeur: CAYROL, Frédéric, 26290 Donzere (FR)
(74) Mandataire: Ipsilon

(57) **Abrégé**

L'invention concerne une structure multicouche pour la réalisation d'un revêtement de sol comprenant une couche supérieure d'usure liée à une couche d'envers qui comprend une première couche compacte obtenue à partir d'un plastisol PVC gélifié imprégnant une partie de l'épaisseur d'une première armature de renfort sous la forme d'un voile de fibres de verre et une couche moussée obtenue à partir d'un plastisol PVC gélifié et imprégnant l'autre partie de l'épaisseur dudit voile de fibres de verre et de manière à ce que le voile de fibres de verre soit totalement imprégné.

## Description

### Domaine technique

La présente invention concerne une structure multicouche et son procédé de fabrication, pour la réalisation d'un revêtement de sol présentant des propriétés acoustiques, dont la pose est facilitée et l'épaisseur et le poids limités.

### Art antérieur

Il est connu de l'état de la technique une structure multicouche pour la réalisation d'un revêtement de sol comprenant une couche supérieure d'usure composée au moins de polychlorure de vinyle (PVC), une couche décor imprimée et une couche d'envers moussée, réalisée par exemple à partir de PVC. Ces revêtements de sols se présentent généralement sous forme de rouleau ou bien sous forme de dalle ou lame souple, enroulable. Ces revêtements de sols peuvent notamment être réalisés par un procédé d'enduction de plastisol PVC.

La pose de ce type de revêtement de sol consiste généralement à appliquer une colle liquide acrylique sur le support à recouvrir puis à dérouler et positionner le revêtement de sol sur la colle de manière à le fixer de façon permanente. Cette étape est fastidieuse et complexifie d'autant les rénovations futures des mêmes supports, le seul moyen de déposer le revêtement de sol étant de l'arracher du support.

Afin de faciliter la pose et d'améliorer la stabilité dimensionnelle de ce type de revêtement de sol, il est connu que la couche d'envers de ces structures multicouches comprennent un voile de verre totalement imprégné d'un plastisol PVC gélifié compact. La face de la couche d'envers au contact de la couche d'usure est généralement imprimée par héliogravure afin de présenter une couche décor.

Une autre solution consiste à proposer des revêtements de sol dit « plombants », pouvant se poser sans colle. Ces revêtements de sol comprennent notamment une couche d'envers dont le poids et/ou l'épaisseur est augmentée afin de limiter la formation de fronces ou de plis lorsque le revêtement est posé.

Cependant, les solutions actuelles ne sont pas satisfaisantes car elles nécessitent toujours l'emploi de colles poissantes. D'autre part l'alourdissement du revêtement de sol détériore sa facilité de manipulation par le poseur et augmente son empreinte carbone.

Une solution connue de revêtement de sol en pose libre, c'est-à-dire sans colle permanente, consiste à rigidifier le revêtement de sol en intercalant une seconde armature de renfort, par exemple un second voile de verre, imprégnée dans une seconde couche gélifiée compacte et disposée au contact de la couche compacte formée par une première armature, sous la forme d'un voile de verre, totalement imprégnée d'un plastisol PVC gélifié. Cette solution apporte de la rigidité mais alourdit le revêtement de sol obtenu, complexifiant ainsi l'opération de pose.

Afin d'améliorer les performances acoustiques de ces revêtements, il est également connu de diminuer la densité de la couche d'envers moussée, au détriment de la résistance au poinçonnement de la structure. Il est également connu d'augmenter l'épaisseur de cette même couche pour augmenter l'effet d'absorption mais cela entraine une plus grande consommation de matière et dégrade l'empreinte carbone du revêtement.

### Exposé de l'invention

L'un des buts de l'invention est donc de proposer une structure multicouche pour la réalisation d'un revêtement de sol dont la manipulation et la pose sont facilitées.

Un autre but de l'invention est de proposer une structure multicouche pour la réalisation d'un revêtement de sol présentant un effet plombant et dont la pose peut se faire sans colle permanente, notamment pour des zones de trafics légers ou moyens selon le classement U.P.E.C U2S et U3 voire U4.

Un autre but de l'invention est de proposer une structure multicouche pour la réalisation d'un revêtement de sol conservant des propriétés d'isolation acoustique selon l'EN ISO 10140-3 d'atténuation acoustique et de sonorité à la marche selon NF EN 16205.

Un autre but de l'invention est de proposer un procédé de fabrication de la structure multicouche.

A cet effet, il est proposé une structure multicouche pour la réalisation d'un revêtement de sol comprenant une couche supérieure d'usure liée à une couche d'envers qui comprend une première couche compacte obtenue à partir d'un plastisol PVC gélifié imprégnant une partie de l'épaisseur d'une première armature de renfort sous la forme d'un voile de fibres de verre et une couche moussée obtenue à partir d'un plastisol PVC gélifié et imprégnant l'autre partie de l'épaisseur dudit voile de fibres de verre et de manière à ce que le voile de fibres de verre soit totalement imprégné.

De par le positionnement de la première armature de renfort à la fois dans l'épaisseur de la couche compacte et de la couche moussée, la structure multicouche présente une amélioration des performances acoustiques pour une épaisseur réduite, tout en conservant une bonne stabilité dimensionnelle et sans alourdir la structure. De façon avantageuse, la couche d'envers comprend une seconde couche compacte obtenue à partir d'un plastisol PVC gélifié renforcée d'une seconde armature de renfort et disposée au contact de la couche supérieure d'usure.

La couche d'envers ainsi formée comprend deux armatures de renfort, pouvant être en contact ou éloignées, afin d'augmenter la rigidité de la structure multicouche et sa stabilité dimensionnelle.

De façon préférentielle, la seconde couche compacte renforcée d'une seconde armature de renfort est disposée au contact de la première couche compacte.

Plus les armatures sont proches et plus elles se comportent comme une armature unique. Il devient possible d'utiliser un poids total d'armatures de renfort dans un revêtement de sol qui serait difficile à atteindre avec une armature unique.

D'autre part, plus les armatures sont éloignées et plus on augmente la rigidité de la structure.

De façon préférentielle, la seconde armature de renfort est entièrement située dans les premiers 30% de l'épaisseur de la couche d'envers.

De par son positionnement dans les premiers 30% de l'épaisseur de la couche d'envers, la seconde armature de renfort vient compenser des effets de dilatation et contraction dus à la couche supérieure d'usure et à la partie supérieure de la couche d'envers.

Avantageusement, la première armature de renfort est entièrement située dans les premiers 50% de l'épaisseur de la couche d'envers.

Les pourcentages d'épaisseur de la couche d'envers sont mesurés à partir de la face supérieure de la couche d'envers en contact avec la couche supérieure d'usure. Par entièrement située on entend que toute l'épaisseur de l'armature de renfort, et pas uniquement sa ligne médiane, est comprise dans le pourcentage d'épaisseur de la couche donné.

De par son positionnement dans les premiers 50% de la couche d'envers la première armature de renfort est située à proximité de la seconde armature de renfort afin de limiter l'effet bilame créé par les armatures de renfort dans la structure multicouche et ne pas trop la rigidifier. D'autre part la première armature de renfort vient également compenser des effets de dilatation de la couche d'envers.

Le fait que la seconde armature de renfort soit entièrement située dans les premiers 30% de l'épaisseur de la couche d'envers et que la première armature de renfort soit entièrement située dans les premiers 50% de l'épaisseur de la couche d'envers permet donc de limiter l'effet bilame et d'obtenir une rigidité plus homogène tout en compensant les effets de dilatation et de contraction de la couche supérieure de la structure.

La structure multicouche comprend avantageusement une couche décor. Ainsi, de façon préférentielle la couche supérieure d'usure est transparente ou translucide et comprend une couche décor visible au travers de ladite couche supérieure d'usure.

L'épaisseur de la première couche compacte est avantageusement inférieure à l'épaisseur du voile de fibres de verre. Ceci permet de limiter la quantité de matière à utiliser pour la structure multicouche tout en la stabilisant et en augmentant son poids. La première couche compacte peut être entièrement noyée dans une partie de l'épaisseur du voile de fibres de verre ou partiellement imprégnée. Si la première couche compacte est partiellement imprégnée cela signifie qu'une partie de l'épaisseur de la couche compacte ne présente pas d'armature de renfort. Une première couche compacte entièrement noyée dans une partie de l'épaisseur du voile de fibres de verre et facilement réalisable en enduisant un plastisol de PVC liquide sur une face de l'épaisseur d'un voile de fibres de verre puis en le gélifiant. Comme l'épaisseur de la couche compacte est inférieure à l'épaisseur du voile de fibres de verre, le voile ne va pas se déplacer dans le plastisol liquide, « flotter », le temps que celui-ci se gélifie. Ainsi le positionnement du voile de verre dans l'épaisseur de la couche compacte est beaucoup plus facile à maitriser et la structure obtenue présente des caractéristiques techniques moins soumises aux variations de fabrication.

La face supérieure de la couche compacte est généralement directement liée à la face inférieure de la couche supérieure d'usure.

De façon avantageuse, l'épaisseur de la couche moussée est comprise entre 1,4 et 2,1 mm afin d'obtenir de bonnes propriétés acoustiques selon l'EN ISO 10140-3, en particulier d'isolation acoustique selon NF EN ISO 717-2 de mai 2013 et de sonorité à la marche selon NF EN 16205 d'aout 2013.

Préférentiellement et toujours pour améliorer les propriétés acoustiques sans dégrader la résistance au poinçonnement, la couche moussée présente une densité comprise entre 0,3 et 0,6, préférentiellement entre 0,4 et 0,5.

De façon plus préférentielle, l'épaisseur de la couche moussée est comprise entre 1,4 et 2,1 mm, préférentiellement entre 1,6 et 1,95 mm, plus préférentiellement entre 1,7 et 1,85 mm et présente une densité comprise entre 0,3 et 0,6, préférentiellement entre 0,4 et 0,5.

Une couche compacte présente une densité plus importante qu'une couche moussée. A titre préférentiel, la première couche compacte présente une densité comprise entre 1 et 1,6, préférentiellement comprise entre 1,3 et 1,6, afin d'améliorer la résistance au poinçonnement de la structure multicouche.

Le voile de fibres de verre de la première couche compacte présente une épaisseur préférentiellement comprise entre 0,3 et 0,8 mm. Une épaisseur plus importante rend difficile l'imprégnation par un plastisol de l'ensemble du voile. Une épaisseur plus faible augmente le risque de casse pendant la fabrication de la structure multicouche.

L'invention concerne également un procédé de fabrication d'une telle structure multicouche remarquable en ce qu'il comprend les étapes qui consistent à :
- enduire une couche de plastisol PVC liquide sur une face d'une première armature de renfort comprenant un voile de fibres de verre de manière à imprégner une partie de l'épaisseur du voile de fibres de verre et conserver l'autre partie libre ;
- gélifier ladite couche de plastisol de manière à former une première couche compacte;
- enduire une couche de plastisol PVC liquide comprenant un agent d'expansion de manière à imprégner l'autre partie de l'épaisseur du voile de fibres de verre de manière à ce que le voile de fibres de verre soit totalement imprégné ;
- gélifier ladite couche de plastisol PVC liquide comprenant un agent d'expansion de manière à former une première couche moussée et former une couche d'envers ;
- obtenir une couche supérieure d'usure ;
- lier la couche supérieure d'usure et la couche d'envers pour former la structure multicouche.

De façon avantageuse l'invention concerne également un procédé de fabrication d'une telle structure multicouche dont la couche d'envers comprend une seconde couche compacte obtenue à partir d'un plastisol PVC gélifié renforcée d'une seconde armature de renfort et disposée au contact de la couche supérieure d'usure, ledit procédé étant remarquable en ce qu'il comprend des étapes qui consistent à :
- enduire une couche de plastisol PVC liquide sur une seconde couche compacte renforcée d'une seconde armature de renfort ;
- disposer une première armature de renfort comprenant un voile de fibres de verre sur la couche de plastisol PVC liquide de manière à imprégner une partie de l'épaisseur du voile de fibres de verre et conserver l'autre partie de l'épaisseur du voile de fibres de verre libre ;
- gélifier ladite couche de plastisol de manière à former une première couche compacte ;
- enduire une couche de plastisol PVC liquide comprenant un agent d'expansion de manière à imprégner l'autre partie de l'épaisseur du voile de fibres de verre de manière à ce que le voile de fibres de verre soit totalement imprégné ;
- gélifier ladite couche de plastisol PVC liquide comprenant un agent d'expansion de manière à former une première couche moussée et former une couche d'envers;
- obtenir une couche supérieure d'usure;
- lier la couche supérieure d'usure et la couche d'envers pour former la structure multicouche.

### Brève description des dessins

D'autres caractéristiques et avantages de l'invention ressortiront clairement de la description qui en est réalisée ci-après, à titre indicatif et nullement limitatif, en référence aux figures annexées dans lesquelles :
[Fig.1] est une représentation schématique et en coupe transversale d'un premier exemple de réalisation de la structure multicouche selon l'invention.
[Fig.2] est une représentation schématique en coupe d'un second exemple de réalisation de la structure multicouche selon l'invention.
[Fig.3] est une représentation schématique en coupe d'un troisième exemple de réalisation de la structure multicouche selon l'invention.

### Description détaillée de l'invention

La structure multicouche (1) selon l'invention peut présenter toute forme, particulièrement en rouleaux mais également en panneau, dalle ou lame. Une structure sous forme de rouleaux mesure généralement entre 1 et 4 mètres de large et entre 10 et 30 mètres de long. Une structure sous forme de panneau, dalle ou lame, de forme carré ou rectangulaire, mesure généralement de 10 à 100cm de large et de 40 à 150 cm de long.

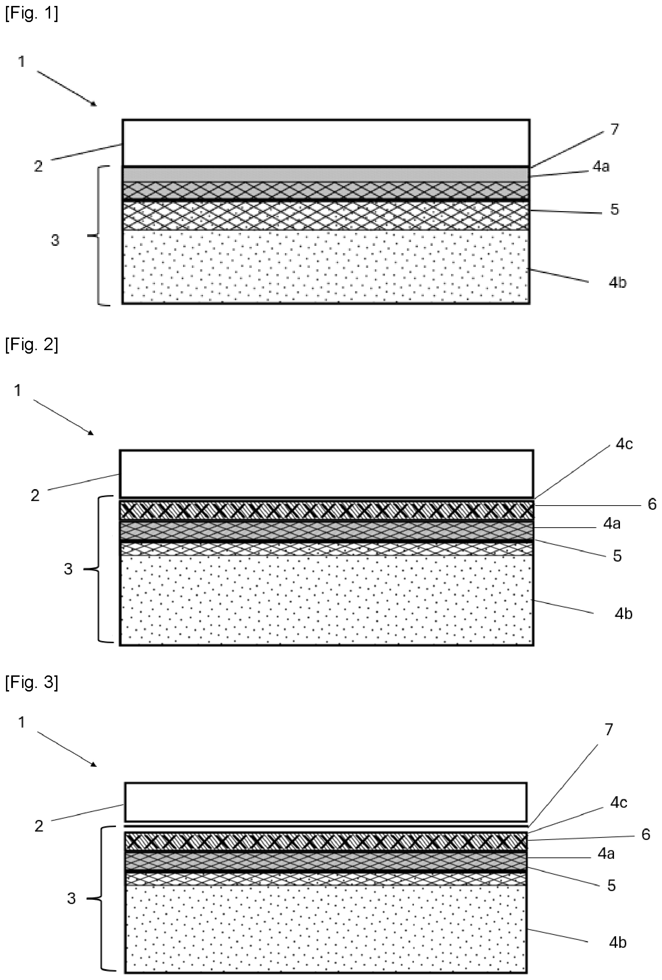

En référence à la figure 1, la structure multicouche (1) comprend une couche supérieure d'usure (2) liée à une couche d'envers (3) qui comprend une première couche compacte (4a) obtenue à partir d'un plastisol PVC gélifié imprégnant une partie de l'épaisseur d'une première armature de renfort sous la forme d'un voile de fibres de verre (5) et une couche moussée (4b) obtenue à partir d'un plastisol PVC gélifié et imprégnant l'autre partie de l'épaisseur dudit voile de fibres de verre (5) et de manière à ce que le voile de fibres de verre (5) soit totalement imprégné.

De par le positionnement de la première armature de renfort à la fois dans l'épaisseur de la couche compacte(4a) et de la couche moussée (4b), la structure multicouche présente une amélioration des performances acoustiques pour une épaisseur réduite, tout en conservant une bonne stabilité dimensionnelle et sans alourdir la structure.

La première armature de renfort se présente sous la forme d'un voile de fibres de verre (5). Alternativement d'autres fibres présentant des performances équivalentes de résistance à l'étirement pourront être utilisées, en complément ou en alternative aux fibres de verre. A titre d'exemple, il est possible d'utiliser des fibres de cellulose, de viscose ou de lyocell, seules ou en mélange.

Un voile de fibre de verre (5) permet d'obtenir une bonne imprégnation par un plastisol PVC permettant une bonne résistance à la délamination de la structure multicouche. Le voile de verre (5) de la première couche compacte (4a), présente généralement une masse surfacique comprise entre 30 g/m² et 100 g/m², préférentiellement entre 30 et 55 g/ m².

La résistance à la traction du voile de fibre de verre (5) est généralement comprise entre 100 N/50mm et 400 N/50mm dans les sens long et travers, mesurée selon la méthode ISO 1924/2.

La perméabilité à l'air du voile de fibre de verre (5) est généralement comprise entre 7500 et 10500 l/m²/s mesurée à 200 Pa l/m²/s sur une surface de 20 cm² selon ISO 9237.

De manière à combiner les avantages des différentes solutions existantes, le première armature de renfort de la première couche compacte (4a) peut comprendre en complément du voile de verre (5) une grille de verre, non représentée, qui est complexée au moyen d'un liant, de préférence par lamination. L'armature de renfort formée par le voile de verre (5) et la grille de verre est un complexe. Alternativement d'autres fibres présentant des performances équivalentes de résistance à l'étirement pourront être utilisées, en complément ou en alternative aux fibres de verre du voile et/ou de la grille du complexe. A titre d'exemple, il est possible d'utiliser des fibres de cellulose, de viscose ou de lyocell, seules ou en mélange.

La couche supérieure (2) d'usure, permet la maîtrise de la glissance, la résistance à l'usure, la facilité de nettoyage. Elle présente généralement une épaisseur comprise entre 0,25 et 1 mm, préférentiellement entre 0,3 et 0,7 mm pour diminuer le poids de la structure multicouche. Lorsqu'elle est réalisée à partir de PVC, elle comprend généralement de 20 à 50 PCR de plastifiants.

La couche supérieure (2) d'usure peut être obtenue par extrusion, par calandrage, par pressage, ou par enduction puis gélification d'un plastisol de PVC.

La première couche compacte (4a) et la couche moussée (4b) étant obtenue à partir d'un plastisol PVC gélifié, il est préférable que la couche supérieure d'usure (2) soit obtenue par enduction puis gélification d'un plastisol de PVC pour diminuer le coût de fabrication de la structure multicouche et simplifier l'outil industriel mettant en œuvre son procédé de fabrication.

La couche supérieure d'usure (2) peut aussi assurer la fonction de décor, notamment si elle est obtenue à partir d'un plastisol teinté ou par pressage de granulés teintés, par exemple obtenus à partir de granulés de PVC plastifiés et teintés.

Quel que soit le mode de réalisation, la couche supérieure d'usure (2) peut être revêtue d'un vernis (non représenté) sans sortir du cadre de l'invention, tel qu'un vernis à base de polyuréthane ou d'uréthane acrylate. La couche supérieure (2) d'usure peut être vernie et / ou grainée afin d'améliorer la résistance à la tâche et à la rayure et améliorer le réalisme du décor.

De façon avantageuse et tel que représenté selon la figure 2, la couche d'envers (3) comprend une seconde couche compacte obtenue à partir d'un plastisol PVC gélifié (4c) renforcée d'une seconde armature de renfort (6) et disposée au contact de la couche supérieure d'usure (2). De façon avantageuse, aucune couche polymère distincte de la seconde couche compacte (4c) n'est interposée entre la seconde couche compacte (4c) et la couche supérieure d'usure (2), hors décor imprimé et éventuellement une couche de lissage supportant le décor imprimé et réalisée à partir de plastisol gélifié.

La couche d'envers (3) ainsi formée comprend deux armatures de renfort (5,6), pouvant être en contact ou éloignées, afin d'augmenter la rigidité de la structure multicouche (1) et sa stabilité dimensionnelle.

Il devient possible d'utiliser un poids total d'armatures de renfort (5, 6) dans un revêtement de sol qui, si elle se présentait sous la forme d'une unique armature de poids équivalent, serait complexe à imprégner complètement et rendrait trop souple la structure multicouche selon l'invention et donc moins adapté à la pose libre.

La seconde armature de renfort (6) peut être une grille de verre, un voile de fibres de verre ou un complexe comprenant une grille et un voile de verre. Alternativement d'autres fibres présentant des performances équivalentes de résistance à l'étirement pourront être utilisées, en complément ou en alternative aux fibres de verre. A titre d'exemple, il est possible d'utiliser des fibres de cellulose, de viscose ou de lyocell, seules ou en mélange.

De préférence, la seconde armature de renfort (6) de la seconde couche compacte (4c) est un voile de fibres de verre et présente une masse surfacique comprise entre 30 g/m² et 100 g/m², préférentiellement entre 50 et 70 g/ m². La masse surfacique du voile de fibres de verre de la seconde armature de renfort (6) est préférentiellement supérieure à celle du voile (5) de la première armature de renfort.

La somme des masses surfacique du voile de fibres de verre de la seconde armature de renfort (6) et du voile (5) de la première armature de renfort est préférentiellement comprise entre 80 g/m² et 130 g/m², préférentiellement entre 100 et 120 g/ m², afin de favoriser l'imprégnation de chaque voile, d'obtenir une bonne stabilité dimensionnelle et de faciliter la pose de la structure multicouche (1) en la rigidifiant.

La résistance à la traction du voile de fibre de verre de la seconde armature de renfort (6) est généralement choisie pour être comprise entre 100 N/50mm et 400 N/50mm dans les sens long et travers, mesurée selon la méthode ISO 1924/2.

La perméabilité à l'air du voile de fibre de verre de la seconde armature de renfort (6) est généralement comprise entre 2000 et 4000 l/m²/s mesurée à 200 Pa sur une surface de 20 cm² selon ISO 9237.

De façon préférentielle, la seconde couche compacte (4c) renforcée d'une seconde armature de renfort (6) est disposée au contact de la première couche compacte (4a). Plus les armatures (5, 6) sont proches et plus elles se comportent comme une armature unique. De façon avantageuse les armatures (5, 6) sont distantes, au sens de la distance entre la face inférieure de l'armature (6) et la face supérieure de l'armature (5), de moins de 0,1 mm voire moins de 0,05 mm.

D'autre part, plus les armatures (5, 6) sont éloignées et plus on augmente la rigidité de la structure par un effet bilame.

Quel que soit le mode de réalisation et de façon préférentielle, la seconde armature de renfort (6) est entièrement située dans les premiers 30% de l'épaisseur de la couche d'envers (3).

De par son positionnement dans les premiers 30% de l'épaisseur de la couche d'envers (3), la seconde armature de renfort (6) vient compenser des effets de dilatation et contraction dus à la couche supérieure d'usure (2) et à la partie supérieure de la couche d'envers (3).

Quel que soit le mode de réalisation, la première armature de renfort (5) est avantageusement entièrement située dans les premiers 50% de l'épaisseur de la couche d'envers (3).

De par son positionnement dans les premiers 50% de la couche d'envers (3) la première armature de renfort (5) la première armature de renfort vient également compenser des effets de dilatation de la couche d'envers (3). D'autre part celle-ci est située à proximité de la seconde armature de renfort (6) le cas échéant, afin de limiter l'effet bilame créé par les armatures de renfort (5, 6) dans la structure multicouche (1) et rigidifier la structure de manière homogène, c'est-à-dire que la rigidité est similaire quel que soit le sens de mesure.

Dans un mode de réalisation particulier compatible avec les modes de réalisation des figures 1 et 2, et en référence à la figure 3, la couche supérieure d'usure (2) est transparente ou translucide et comprend une couche décor (7) visible au travers de ladite couche supérieure d'usure (2).

La couche décor (7) peut être imprimée sur une face inférieure de la couche supérieure (2) d'usure ou sur un film polymère, non représenté, tel qu'un film PVC. Selon une alternative représentée figure 3, la couche décor (7) peut être imprimée sur la face supérieure de la seconde couche compacte (4c). La couche décor (7) peut être imprimée par toute technique connue telle que l'héliogravure ou l'impression numérique. Selon une variante particulièrement avantageuse, la couche décor (7) est imprimée sur la face supérieure de la seconde couche compacte (4c), puis recouverte par la couche supérieure d'usure (2), ce qui permet d'obtenir une structure simple à réaliser et présentant une bonne résistance à la délamination. Une couche décor (7) imprimée sur la face supérieure de la seconde couche compacte (4c) et recouverte d'une couche supérieure d'usure (2) obtenue par enduction et gélification d'un plastisol de PVC a pour avantage d'obtenir une structure multicouche simple à réaliser et très résistante à la délamination.

Quel que soit le mode de réalisation, l'épaisseur de la première couche compacte (4a) est préférentiellement inférieure à l'épaisseur du voile de fibres de verre (5).

Ceci permet de limiter la quantité de matière à utiliser pour la structure multicouche (1) tout en la stabilisant et en limitant son poids. La première couche compacte (4a) peut être préférentiellement entièrement noyée dans une partie de l'épaisseur du voile de fibres de verre (5). Alternativement la première couche compacte (4a) est partiellement imprégnée, c'est-à-dire qu'une partie minime de l'épaisseur de la couche compacte (4a) ne présente pas d'armature de renfort. Une première couche compacte (4a) entièrement noyée dans une partie de l'épaisseur du voile de fibres de verre (5) est facilement réalisable en enduisant une faible quantité de plastisol de PVC liquide sur une face de l'épaisseur d'un voile de fibres de verre (5) puis en le gélifiant ou en enduisant un plastisol liquide sur un support et en déposant le voile de fibres de verre (5) sur ce plastisol avant gélification. Comme l'épaisseur de la couche compacte (4a) est inférieure à l'épaisseur du voile de fibres de verre (5), le voile ne va pas se déplacer dans le plastisol liquide, « flotter », le temps que celui-ci se gélifie. Il a notamment été constaté qu'un voile d'épaisseur inférieure à l'épaisseur de plastisol liquide enduit, et donc de couche gélifiée, avait tendance à ne pas conserver une position régulière dans l'épaisseur de la couche gélifiée. Ainsi, le positionnement du voile de verre dans l'épaisseur de la couche compacte est beaucoup plus facile à maitriser quand l'épaisseur de la première couche compacte (4a) est inférieure à l'épaisseur du voile de fibres de verre (5) et la structure obtenue présente des caractéristiques techniques moins soumises aux variations de fabrication.

De façon préférentielle, l'épaisseur de la couche compacte (4a) est comprise entre 0,15 et 0,7 mm, préférentiellement entre 0,15 et 0,4 mm, plus préférentiellement entre 0,15 et 0,25 mm

La face supérieure de la première couche compacte (4a) ou de la seconde couche compacte obtenue à partir d'un plastisol PVC gélifié (4c) est généralement directement liée à la face inférieure de la couche supérieure d'usure (2).

De façon préférentielle, l'épaisseur de la couche moussée (4b) est comprise entre 1,4 et 2,1 mm afin d'obtenir de bonnes propriétés acoustiques selon l'EN ISO 10140-3, en particulier d'isolation acoustique selon NF EN ISO 717-2 de mai 2013 et de sonorité à la marche selon NF EN 16205 d'aout 2013.

Da façon préférentielle, la couche moussée (4b) présente une densité comprise entre 0,3 et 0,6, pour améliorer les propriétés acoustiques sans dégrader la résistance au poinçonnement, et plus préférentiellement entre 0,4 et 0,5 pour obtenir un meilleur compromis entre les performances acoustiques et la résistance au poinçonnement.

De façon plus préférentielle, l'épaisseur de la couche moussée (4b) est comprise entre 1,4 et 2,1 mm, préférentiellement entre 1,6 et 1,95 mm, plus préférentiellement entre 1,7 et 1,85 mm et la couche moussée (4b) présente une densité comprise entre 0,3 et 0,6, préférentiellement entre 0,4 et 0,5. Il est préférable que la couche moussée présente une épaisseur inférieure à 2 mm pour ne pas dégrader la résistance au poinçonnement ou au test du pieds de meuble.

Une couche compacte présente une densité plus importante qu'une couche moussée. A titre préférentiel, la première couche compacte (4a) présente une densité comprise entre 1 et 1,6 afin d'améliorer la résistance au poinçonnement de la structure multicouche (1). Préférentiellement la première couche compacte (4a) présente une densité comprise entre 1,3 et 1,6 pour améliorer la facilité de pose en apportant un effet plombant.

Avantageusement, l'épaisseur du voile de fibres de verre (5) est comprise entre 0,3 et 0,8 mm. Une épaisseur plus importante du voile de fibres de verre (5) rend difficile l'imprégnation par un plastisol de l'ensemble du voile. Une épaisseur plus faible augmente le risque de casse pendant la fabrication de la structure multicouche (1).

L'invention concerne également un procédé de fabrication d'une telle structure multicouche (1) remarquable en ce qu'il comprend les étapes qui consistent à :
- enduire une couche de plastisol PVC liquide sur une face d'une première armature de renfort comprenant un voile de fibres de verre (5) de manière à imprégner une partie de l'épaisseur du voile de fibres de verre (5) et conserver l'autre partie libre ;
- gélifier ladite couche de plastisol de manière à former une première couche compacte (4a) ;
- enduire une couche de plastisol PVC liquide comprenant un agent d'expansion de manière à imprégner l'autre partie de l'épaisseur du voile de fibres de verre (5) de manière à ce que le voile de fibres de verre (5) soit totalement imprégné ;
- gélifier ladite couche de plastisol PVC liquide comprenant un agent d'expansion de manière à former une première couche moussée (4b) et former une couche d'envers (3);
- obtenir une couche supérieure d'usure (2) ;
- lier la couche supérieure d'usure (2) et la couche d'envers (3).

Le procédé de réalisation de la structure multicouche (1) selon l'invention permet de positionner le voile de fibres de verre (5) entre les couches compacte (4a) et moussée (4b). La structure obtenue présente des propriétés acoustiques équivalentes à une structure dont la couche moussée n'imprègne pas l'épaisseur du voile de fibre de verre tout en réduisant l'épaisseur totale et le poids de la structure multicouche. Le procédé permet d'obtenir, après gélification, une structure multicouche (1) dans laquelle la seconde armature (6) est entièrement située dans les premiers 30% de l'épaisseur de la couche d'envers (3) et la première armature (5) est entièrement située dans les premiers 50% de l'épaisseur de la couche d'envers (3).

De façon avantageuse l'invention concerne également un procédé de fabrication d'une structure multicouche (1) selon la figure 2 ou 3 dont la couche d'envers (3) comprend une seconde couche compacte (4c) obtenue à partir d'un plastisol PVC gélifié renforcée d'une seconde armature de renfort et disposée au contact de la couche supérieure d'usure (2), ledit procédé étant remarquable en ce qu'il comprend des étapes qui consistent à :
- enduire une couche de plastisol PVC liquide sur une seconde couche compacte renforcée d'une seconde armature de renfort (6) ;
- disposer une première armature de renfort comprenant un voile de fibres de verre (5) sur la couche de plastisol PVC liquide de manière à imprégner une partie de l'épaisseur du voile de fibres de verre (5) et conserver l'autre partie de l'épaisseur du voile de fibres de verre (5) libre ;
- gélifier ladite couche de plastisol de manière à former une première couche compacte (4a) ;
- enduire une couche de plastisol PVC liquide comprenant un agent d'expansion de manière à imprégner l'autre partie de l'épaisseur du voile de fibres de verre (5) de manière à ce que le voile de fibres de verre (5) soit totalement imprégné ;
- gélifier ladite couche de plastisol PVC liquide comprenant un agent d'expansion de manière à former une première couche moussée (4b) et former une couche d'envers (3);
- obtenir une couche supérieure d'usure (2);
- lier la couche supérieure d'usure (2) et la couche d'envers (3).

De façon alternative la couche d'usure (2) est enduite puis gélifiée sur la première couche compacte (4a) préalablement imprimée.

Ce procédé de réalisation préféré de la structure multicouche (1) selon l'invention permet d'ajouter une seconde armature de renfort dans une seconde couche compacte (4c) tout en positionnant le voile de fibres de verre (5) entre les couches compacte (4a) et moussée (4b). La structure obtenue présente des propriétés acoustiques équivalentes à une structure dont la couche moussée n'imprègne pas l'épaisseur du voile de fibre de verre (5) tout en réduisant l'épaisseur totale et le poids de la structure multicouche (1) et en améliorant les possibilités de pose libre ou semi-libre du revêtement. Ce procédé permet donc d'ajouter une seconde armature de renfort dans une seconde couche compacte (4c) tout en positionnant le voile de fibre de verre (5) entre les couches compacte (4a) et moussée (4b), la structure multicouche (1) obtenue présentant des propriétés acoustiques équivalentes à une structure dont la couche moussée n'imprègne pas l'épaisseur du voile et tout en réduisant l'épaisseur totale, le poids de la structure multicouche et en améliorant les possibilités de pose libre ou semi-libre du revêtement.

L'épaisseur totale de la structure multicouche (1) est généralement comprise entre 2,5 et 4 mm, préférentiellement entre 2,8 et 3,3 mm, plus préférentiellement entre 3 et 3,2 mm.

La masse surfacique de la structure multicouche (1) est généralement comprise entre 1500 g/m² et 3500 g/m², préférentiellement entre 2000 g/m² et 2500g/m².

### Exemple 1 :

Il est réalisé une structure multicouche (1) pour la réalisation d'un revêtement de sol en rouleau selon l'invention reprenant le mode de réalisation de la figure 3, comprenant successivement :
- une couche supérieure d'usure (2) d'une épaisseur de 0,35 mm, de densité 1,2, liée à une couche d'envers (3)
- une seconde couche compacte (4c) d'une épaisseur de 0,75 mm, de densité 1,5, imprimée d'une couche décor (7) par héliogravure et renforcée d'un voile de verre de 70g/m².
- une première couche compacte (4a) d'une épaisseur de 0,15 mm, de densité 1,5, obtenue à partir d'un plastisol PVC gélifié imprégnant une partie de l'épaisseur d'une première armature de renfort sous la forme d'un voile de fibres de verre (5) de 35 g/m². Le voile de verre (5) non imprégné présente une épaisseur de 0,4mm. L'épaisseur de la première couche compacte (4a) est entièrement comprise dans l'épaisseur du voile de fibres de verre (5). La première couche compacte (4a) est directement liée à la seconde couche compacte (4c)
- une couche moussée (4b) d'une épaisseur de 1,85 mm, de densité 0,4, obtenue à partir d'un plastisol PVC gélifié et imprégnant l'autre partie de l'épaisseur dudit voile de fibres de verre (5), soit 0,25 mm, et de manière à ce que le voile de fibres de verre (5) soit totalement imprégné.

La seconde couche compacte est obtenue par enduction d'une première couche de plastisol PVC sur une première face d'un voile de verre de manière à l'imprégner entièrement, puis en enduisant une seconde couche de plastisol de lissage sur la face opposée du voile de verre, de manière à obtenir une surface lisse pour l'impression de la couche décor (7).

Le revêtement ainsi réalisé présente une épaisseur de 3,10 mm et une masse surfacique de 2200 g/m²+/- 10%.

Il est réalisé une seconde structure multicouche de référence, hors du cadre de l'invention, et qui comprend successivement:
- une couche supérieure d'usure d'une épaisseur de 0,35 mm, de densité 1,2, liée à une couche d'envers
- une seconde couche compacte d'une épaisseur de 0,50 mm, de densité 1,5, imprimée d'une couche décor par héliogravure et renforcée d'un voile de verre de 80g/m²
- une première couche compacte d'une épaisseur de 0,45 mm, de densité 1,5, obtenue à partir d'un plastisol PVC gélifié imprégnant totalement l'épaisseur d'une première armature de renfort sous la forme d'un voile de fibres de verre de 50 g/m². Le voile de verre non imprégné présente une épaisseur de 0,4mm. La face inférieure du voile de fibres de verre (5) est en contact avec la couche moussée. La position du voile de fibre de verre dans la première couche compacte est variable et on observe régulièrement une distance de 0,05mm entre les deux voiles.
- une couche moussée (4b) liée à la première couche compacte, d'une épaisseur de 1,85 mm, de densité 0,4, obtenue à partir d'un plastisol PVC gélifié et libre de toute armature.

Le revêtement de référence ainsi réalisé présente une épaisseur de 3,15 mm et une masse surfacique de 2200 g/m² +/- 10%.

**[Tableau 1]**

| | Référence | Exemple 1 |
|---|---|---|
| Isolation acoustique | 18dB | 19dB |
| Poinçonnement 2h30 | <0.2mm | <0.2mm |
| Poinçonnement statique rémanent 24h | <0.1mm | <0.1mm |
| Souplesse | 63.8° | 66.1° |
| Flèche Couche supérieure dessus | 8.3cm | 5.5cm |
| Flèche Couche moussée (4b) dessus | 5.9cm | 3.2cm |
| Incurvation spontanée | 0mm | 0mm |

Les résultats présentés dans le tableau 1 permettent de montrer que l'invention présente un bon niveau d'isolation acoustique, supérieur à 18dB, tout en limitant l'épaisseur de la structure et le poids des armatures de renforts utilisées.

L'épaisseur de la couche moussée non imprégné de l'exemple 1 est plus faible que l'exemple de référence, tout en présentant des performances acoustiques améliorées.

La structure de référence présente un total de 130g/m² d'armatures de renfort, à savoir de voiles de verre, ce qui la rend moins souple, pourtant celle-ci présente plus de flèche. Ce comportement est observé quel que soit le sens de mesure en comparaison à l'exemple 1 qui ne présente que 105g/m² d'armatures de renfort, à savoir de voiles de verre, au total. Le test de la flèche permet de mieux caractériser la rigidité, la « main », de la structure multicouche que le test de souplesse qui est un test localisé sur un petit échantillon de faible largeur. Il a été constaté que les opérations de pose sont facilitées avec une structure multicouche selon l'invention qui présente localement une souplesse similaire voir supérieure à la référence. Cependant, la facilité de pose est améliorée si sur un échantillon long de 297 mm une rigidité plus importante est obtenue, caractérisée par une flèche inférieure à 6 cm si la couche supérieure d'usure est au-dessus lors du test, ou encore inférieure à 4 cm si la couche moussée est placée dessus lors du test. Le test de la flèche reflète en particulier mieux la facilité de pose d'un revêtement destiné à être présenté en rouleaux de plusieurs mètres de large et de long. De préférence, la structure multicouche (1) présente, lors du test de flèche, une valeur inférieure à 6 cm lorsque la couche supérieure d'usure (2) est orientée vers le haut et/ou une valeur inférieure à 4 cm lorsque la couche moussée (4b) est orientée vers le haut.

L'invention permet donc de faciliter l'opération de pose tout en conservant une bonne stabilité dimensionnelle et un bon niveau d'isolation acoustique.

### Exemple 2 :

Il est réalisé une troisième structure multicouche (1) pour la réalisation d'un revêtement de sol en rouleau selon l'invention reprenant le mode de réalisation de la figure 3, comprenant successivement :
- une couche supérieure d'usure (2) d'une épaisseur de 0,35 mm, de densité 1,2, liée à une couche d'envers (3)
- une seconde couche compacte (4c) d'une épaisseur de 0,66 mm, de densité 1,5, imprimée d'une couche décor (7) par héliogravure et renforcée d'un voile de verre de 70g/m².
- une première couche compacte (4a) d'une épaisseur de 0,23 mm, de densité 1,5, obtenue à partir d'un plastisol PVC gélifié imprégnant une partie de l'épaisseur d'une première armature de renfort sous la forme d'un voile de fibres de verre (5) de 35 g/m². Le voile de verre (5) non imprégné présente une épaisseur de 0,40mm. L'épaisseur de la première couche compacte (4a) est entièrement comprise dans l'épaisseur du voile de fibres de verre (5). La première couche compacte (4a) est directement liée à la seconde couche compacte (4c) de sorte que les fibres de la première (5) et la seconde armature de renfort (6) sont distantes de moins de 0,05 mm, voire sont en contact.
- une couche moussée (4b) d'une épaisseur de 1,80 mm, de densité 0,4, obtenue à partir d'un plastisol PVC gélifié et imprégnant l'autre partie de l'épaisseur dudit voile de fibres de verre (5), soit 0,17 mm, et de manière à ce que le voile de fibres de verre (5) soit totalement imprégné.

La seconde couche compacte est obtenue par enduction d'une première couche de plastisol PVC sur une première face d'un voile de verre de manière à l'imprégner entièrement, puis en enduisant une seconde couche de plastisol de lissage sur la face opposée du voile de verre, de manière à obtenir une surface lisse pour l'impression de la couche décor (7).

Le revêtement ainsi réalisé présente une épaisseur de 3,20 mm et une masse surfacique de 2300 g/m²+/- 10%.

### L'exemple 2 est comparé à la Référence.

**[Tableau 2]**

| | Référence | Exemple 2 |
|---|---|---|
| Isolation acoustique | 18dB | 20dB |
| Poinçonnement 2h30 | <0.2mm | ≤0.2mm |
| Poinçonnement statique rémanent 24h | <0.1mm | ≤0.1mm |
| Incurvation spontanée | 0mm | 0mm |
| Incurvation après 6 h à 80°C (mm) | ≤ 0,40 | ≤ 0,10 |
| Résistance au pied de meuble (classe) | P3 | P3 |
| Résistance à la chaise à roulettes (classe) | P3 | P3 |

Les résultats présentés dans le tableau 2 permettent de montrer que l'invention présente un bon niveau d'isolation acoustique, supérieur à 20dB, tout en limitant l'épaisseur de la structure, notamment une couche moussée inférieure à 2mm d'épaisseur, et le poids des armatures de renforts utilisées. Il a notamment été constaté qu'en faisant uniquement varier l'épaisseur de la couche moussée (4b) de la construction de l'exemple 2 l'isolation acoustique pouvait être adaptée au besoin. La valeur d'isolation acoustique peut varier de 18dB pour une couche moussée (4b) de 1,3 mm, de 19dB pour une couche moussée (4b) de 1,6mm et de 20dB pour une couche moussée (4b) de 1,8 mm.

L'épaisseur de la couche moussée non imprégné de l'exemple 2 est donc plus faible que l'exemple de référence, tout en présentant des performances acoustiques encore améliorées et en maintenant une bonne résistance à la chaise à roulette et une incurvation après 6h à 80°c permettant une pose libre à semi-libre en fonction du niveau de trafic.

L'invention permet donc de faciliter l'opération de pose tout en conservant une bonne stabilité dimensionnelle et un niveau d'isolation acoustique amélioré.

Les valeurs citées dans la description sont des valeurs mesurées selon les normes suivantes :
- Epaisseur totale : NF EN ISO 24346 avril 2012
- Epaisseurs des couches : NF EN ISO 24340 avril 2012
- Poids / Masse surfacique : ISO 23997 décembre 2007
- Module à 1% d'allongement : QB 30 - M1-Ueatc juillet 2015
- Poinçonnement statique rémanent (Bâtiment) : ISO 24343-1 juin 2007
- Stabilité dimensionnelle : NF EN ISO 23999 Aout 2018
- Incurvation après 6hr à 80°C ; NF EN ISO 23999 Aout 2018
- Isolation acoustique NF EN ISO 717-2 mai 2013, NF EN ISO 10140-3 mars 2013
- Sonorité à la marche NF EN 16205 Aout 2013, NF EN 16205/IN1 Mai 2018.

Pour les valeurs de souplesse en torsion, trois échantillons de 190x25mm sont découpés dans le sens long, le sens de fabrication, puis conditionnés quinze minutes dans un bain thermostaté à 23°C. Chaque éprouvette est ensuite placée entre les mors d'un torsiomètre de modèle « Vortex -i » du fabricant « Mecmesin », soit un couplemètre motorisé piloté par ordinateur, avec 100 mm de distance entre mors. Le torsiomètre applique ensuite une pré-charge de 0.07 N.m et mesure l'angle de torsion (°) de l'échantillon obtenu. La valeur calculée est la moyenne de l'angle de torsion pour les trois échantillons.

Pour les valeurs de flèche, le test suivant est effectué. Trois échantillons de format A4 sont découpés, le bord le plus long du format dans le sens long de la structure, le sens de fabrication, puis conditionné 24hr à 23°C. Une portion de 100mm dans la longueur du sens long est ensuite bloquée sur un support plan et l'autre portion de 197mm est laissée libre en débord du support pendant trente secondes. A l'aide d'un réglet on mesure immédiatement la flèche obtenue, la distance verticale entre le plan du support et l'extrémité de la portion libre, au bout de ces trente secondes. La valeur calculée est la moyenne de la flèche mesurée pour les trois échantillons. Il est précisé quelle couche est visible pendant le test, la couche supérieure d'usure ou la couche moussée disposée en envers de la structure car les résultats peuvent être différents. Si la couche supérieure d'usure est visible la structure repose sur la couche moussée et inversement.

## Revendications

1. Structure multicouche (1) pour la réalisation d'un revêtement de sol comprenant une couche supérieure d'usure (2) liée à une couche d'envers (3) qui comprend une première couche compacte (4a) obtenue à partir d'un plastisol PVC gélifié imprégnant une partie de l'épaisseur d'une première armature de renfort sous la forme d'un voile de fibres de verre (5) et une couche moussée (4b) obtenue à partir d'un plastisol PVC gélifié et imprégnant l'autre partie de l'épaisseur dudit voile de fibres de verre (5) et de manière à ce que le voile de fibres de verre (5) soit totalement imprégné.

2. Structure multicouche (1) selon la revendication 1, ***caractérisée* en ce que** la couche d'envers (3) comprend une seconde couche compacte (4c) obtenue à partir d'un plastisol PVC gélifié renforcée d'une seconde armature de renfort (6) et disposée au contact de la couche supérieure d'usure (2).

3. Structure multicouche (1) selon la revendication 2, ***caractérisée en ce que*** la seconde couche compacte (4c) renforcée d'une seconde armature de renfort (6) est disposée au contact de la première couche compacte (4a).

4. Structure multicouche (1) selon la revendication 2, ***caractérisée* en ce que** la seconde armature de renfort (6) est entièrement située dans les premiers 30% de l'épaisseur de la couche d'envers (3).

5. Structure multicouche (1) selon l'une des revendications précédentes, ***caractérisée en ce que*** la première armature de renfort (5) est entièrement située dans les premiers 50% de l'épaisseur de la couche d'envers (3).

6. Structure multicouche (1) selon l'une des revendications précédentes, ***caractérisée* en ce que** la couche supérieure d'usure (2) est transparente ou translucide et comprend une couche décor (7) visible au travers de ladite couche supérieure d'usure (2).

7. Structure multicouche (1) selon l'une des revendications précédentes ***caractérisée en ce que*** l'épaisseur de la première couche compacte (4a) est inférieure à l'épaisseur du voile de fibres de verre (5).

8. Structure multicouche (1) selon l'une des revendications précédentes ***caractérisée en ce que*** l'épaisseur de la couche moussée (4b) est comprise entre 1,4 et 2,1 mm.

9. Structure multicouche (1) selon l'une des revendications précédentes, ***caractérisée* en ce que** la couche moussée (4b) présente une densité comprise entre 0,3 et 0,6, préférentiellement entre 0,4 et 0,5.

10. Structure multicouche (1) selon l'une des revendications précédentes, ***caractérisée* en ce que** la première couche compacte (4a) présente une densité comprise entre 1 et 1,6, préférentiellement entre 1,3 et 1,6.

11. Structure multicouche (1) selon l'une des revendications précédentes ***caractérisée en ce que*** l'épaisseur du voile de fibres de verre (5) est comprise entre 0,3 et 0,8 mm.

12. Procédé de fabrication d'une structure multicouche (1) selon la revendication 1, ***caractérisé en ce qu***'il comprend les étapes qui consistent à :
- enduire une couche de plastisol PVC liquide sur une face d'une première armature de renfort comprenant un voile de fibres de verre (5) de manière à imprégner une partie de l'épaisseur du voile de fibres de verre (5) et conserver l'autre partie libre ;
- gélifier ladite couche de plastisol de manière à former une première couche compacte (4a) ;
- enduire une couche de plastisol PVC liquide comprenant un agent d'expansion de manière à imprégner l'autre partie de l'épaisseur du voile de fibres de verre (5) de manière à ce que le voile de fibres de verre (5) soit totalement imprégné ;
- gélifier ladite couche de plastisol PVC liquide comprenant un agent d'expansion de manière à former une première couche moussée (4b) et former une couche d'envers (3);
- obtenir une couche supérieure d'usure (2) ;
- lier la couche supérieure d'usure (2) et la couche d'envers (3).

13. Procédé de fabrication d'une structure multicouche (1) selon la revendication 2, ***caractérisé en ce qu***'il comprend des étapes qui consistent à :
- enduire une couche de plastisol PVC liquide sur une seconde couche compacte (4c) renforcée d'une seconde armature de renfort (6) ;
- disposer une première armature de renfort comprenant un voile de fibres de verre (5) sur la couche de plastisol PVC liquide de manière à imprégner une partie de l'épaisseur du voile de fibres de verre (5) et conserver l'autre partie de l'épaisseur du voile de fibres de verre (5) libre ;
- gélifier ladite couche de plastisol de manière à former une première couche compacte (4a) ;
- enduire une couche de plastisol PVC liquide comprenant un agent d'expansion de manière à imprégner l'autre partie de l'épaisseur du voile de fibres de verre (5) de manière à ce que le voile de fibres de verre (5) soit totalement imprégné ;
- gélifier ladite couche de plastisol PVC liquide comprenant un agent d'expansion de manière à former une première couche moussée (4b) et former une couche d'envers (3);
- obtenir une couche supérieure d'usure (2) ;
- lier la couche supérieure d'usure (2) et la couche d'envers (3). .
